# EUROPÄISCHE PATENTANMELDUNG

(11) **EP 1 249 883 A2**
(43) Veröffentlichungstag der Anmeldung: **16.10.2002**
(21) Anmeldenummer: 02007890.3
(22) Anmeldetag: 09.04.2002
(51) Int. Cl.: H01M 8/06, H02J 9/06

(54) **Vorrichtung zur unterbrechungsfreien Stromversorgung mit einer Brennstoffzelle**

(30) Priorität: 12.04.2001 DE 10118353
(71) Anmelder: RWE Piller GmbH, 37520 Osterode am Harz (DE)
(72) Erfinder: Gosebruch, Harald Dr., 27283 Verden (DE)
(74) Vertreter: Patentanwälte Rehberg + Hüppe

(57) **Zusammenfassung**

Eine Vorrichtung (1) dient zur unterbrechungsfreien Stromversorgung. Sie weist eine Brennstoffzelle (2) zur Stromerzeugung durch kalte Oxidation von Wasserstoff (3) zu Wasser (8) bei Ausfall einer Hauptstromquelle, insbesondere bei Ausfall eines Stromversorgungsnetzes, und einen Speicher (19) für den Wasserstoff (3) auf. Für die Vororterzeugung des Wasserstoffs (3) aus Wasser (8) ist ein Hydrolyseur (10) vorgesehen.

## Beschreibung

Die Erfindung bezieht sich auf eine Vorrichtung zur unterbrechungsfreien Stromversorgung, mit einer Brennstoffzelle zur Stromerzeugung durch kalte Oxidation von Wasserstoff zu Wasser bei Ausfall einer Hauptstromquelle, insbesondere bei Ausfall eines Stromversorgungsnetzes, und mit einem Speicher für den Wasserstoff.

Vorrichtungen zur unterbrechungsfreien Stromversorgung, d.h. sogenannte USV-Anlagen, sind in verschiedenen Ausführungsformen bekannt.

Eine USV-Anlage der eingangs beschriebenen Art geht beispielsweise aus der EP 0 855 098 hervor. Hier sind als Speicher für den Wasserstoff ein Druckbehälter für gasförmigen Wasserstoff und ein Flüssigkeitstank zur Aufnahme von Methanol, aus dem mit einem Reformer Wasserstoff freisetzbar ist, vorgesehen. Die Brennstoffzelle wird zur kurzfristigen Bereitstellung von Strom bei Ausfall der Hauptstromquelle im Stand-by-Betrieb gehalten. Dabei ist ihr Wasserstoffverbrauch zwar klein aber über sehr lange Zeiträume dennoch erheblich.

Die Erfindung befaßt sich speziell mit der unterbrechungsfreien Stromversorgung von remoten Einrichtungen, wie beispielsweise Sende-/Empfangsstationen für den Mobilfunk, die auch als Repeater bezeichnet werden. Derartige Sende-/Empfangsstationen werden typischerweise über ein Stromversorgungsnetz mit Strom versorgt. Wenn dieses Stromversorgungsnetz ausfällt, soll eine USV-Anlage die Stromversorgung für gewisse Zeit sicherstellen. Zur Anwendung kommen hierfür derzeit USV-Anlagen, die nicht der eingangs beschriebenen Art entsprechen, sondern Akkumulatoren als elektrische Energiespeicher aufweisen. Derartige Akkumulatoren sind bezüglich des Zeitraums, in dem sie die Stromversorgung übernehmen können, begrenzt. Darüberhinaus ist ihre Lebensdauer, über die sie eine zuverlässige Funktion aufweisen, mit typischerweise 4 bis 6 Jahren relativ kurz. Dies bedeutet bei einer Anzahl von vielen tausend Sende-/Empfangsstationen für den Mobilfunk einen erheblichen Wartungsbedarf allein für die zugehörigen USV-Anlagen.

Der Erfindung liegt die Aufgabe zugrunde, eine Vorrichtung zur unterbrechungsfreien Stromversorgung der eingangs beschriebenen Art aufzuzeigen, die aufgrund ihres geringen Wartungsbedarfs insbesondere zum Einsatz in remoten Anlagen geeignet ist.

Erfindungsgemäß wird diese Aufgabe dadurch gelöst, daß bei einer Vorrichtung der eingangs beschriebenen Art ein Hydrolyseur für die Vororterzeugung des Wasserstoffs aus Wasser vorgesehen ist.

Bei der neuen Vorrichtung wird nicht auf eine externe Versorgung der Brennstoffzelle mit Wasserstoff gesetzt. Vielmehr wird der Wasserstoff vorort in der USV-Anlage selbst erzeugt. Hierzu dient der Hydrolyseur, der vorort Wasser in Wasserstoff und Sauerstoff zersetzt, wobei der Wasserstoff zur Versorgung der Brennstoffzelle dient. Die Brennstoffzelle kann auch den Sauerstoff von dem Hydrolyseur verwenden. Da bei der Oxidation des Wasserstoffs in der Brennstoffzelle wieder Wasser erzeugt wird, kann ein geschlossener Kreislauf für das Wasser geschaffen werden. Selbst wenn innerhalb dieses Kreislaufs Verluste an Wasserstoff oder Wasser auftreten, reicht ein relativ kleiner Vorratsbehälter zum Ausgleich aus. Zudem ist Wasser in aller Regel ohne weiteres vorort verfügbar. Insofern unterscheidet sich die neue USV-Anlage von jeder herkömmlichen USV-Anlage mit einer Brennstoffzelle oder auch mit einer Brennkraftmaschine dadurch, daß sie keinerlei Abhängigkeit von einer äußeren Brennstoffversorgung aufweist. Nicht einmal nach einem längeren Einsatz der USV-Anlage aufgrund eines Zusammenbruchs eines Stromversorgungsnetzes muß Wasserstoff für die Brennstoffzelle von außen nachgefüllt werden.

Grundsätzlich kann bei der neuen Vorrichtung die Brennstoffzelle unter Anlegen einer elektrischen Spannung von der Hauptstromquelle als der Hydrolyseur betreibbar ist. Diese Doppelfunktion der Brennstoffzelle hat aber den Nachteil eine relativ langen Hochfahrzeit der Brennstoffzelle zu Stromerzeugung, wenn sie gerade als Hydrolyseur betrieben wird. Daneben werden die Einrichtungen für den Gashaushalt der Brennstoffzelle bei deren Doppelfunktion relativ aufwendig.

Es ist daher bei der neuen Vorrichtung bevorzugt, wenn der Hydrolyseur als separates Bauteil neben der Brennstoffzelle vorgesehen ist. Der Hydrolyseur kann dabei für seine Aufgabe der Wasserstofferzeugung spezialisiert sein. Der Gashaushalt der neuen Vorrichtung ist einfacher realisierbar. Vor allem aber kann die Brennstoffzelle im Stand-by-Betrieb gehalten werden, um kürzeste Ansprechzeiten bei einem Ausfall der Hauptstromquelle zu realisieren.

Der von dem Hydrolyseur erzeugte Wasserstoff kann in der neuen USV-Anlage in einem Hydridspeicher gespeichert werden. Es ist zwar bekannt, daß Hydridspeicher eine relativ große Beladungszeit aufweisen, wenn ihre Kapazität voll ausgenutzt werden soll. Dies stellt aber innerhalb der neuen USV-Anlage kein Problem dar, da überhaupt keine Notwendigkeit besteht, mit dem Hydrolyseur in kurzen Zeiten große Mengen an Wasserstoff zu erzeugen. Vielmehr ist es sogar günstig, den Hydrolyseur nur für die Erzeugung relativ kleiner Mengen an Wasserstoff je Zeiteinheit auszulegen.

Für den Wasserstoff kann aber auch ein Flüssigkeitstank als Speicher vorgesehen sein, wobei ein Umwandler aus dem vorort erzeugten Wasserstoff eine Speicherflüssigkeit gewinnt, die in dem Flüssigkeitstank lagerbar ist, und wobei ein Reformer zur Versorgung der Brennstoffzelle Wasserstoff aus der Speicherflüssigkeit zurückgewinnnt. Eine für diese Ausführungsform der neuen USV-Anlage geeignete Speicherflüssigkeit ist beispielsweise Methanol, die unter Verwendung von Kohlendioxid aus der Luft aus Wasserstoff herstellbar und dann problemlos in dem Flüssigkeitstank lagerbar ist. Das dabei für eine bestimmte Menge an Wasserstoff beanspruchte Volumen ist verglichen mit der direkten Speicherung von Wasserstoff nur klein.

Wenn für die Abgase der Brennstoffzelle, bei denen es sich um Wasserdampf handelt, ein Kondensator und eine Rückführung für das in dem Kondensator anfallende Wasser zu dem Hydrolyseur vorgesehen sind, weist die neue USV-Anlage den bereits angesprochenen geschlossenen Wasserkreislauf auf. Dem Hydrolyseur kann alternativ ein Wassertank zugeordnet sein der entweder eine relativ große Kapazität hat, die den Wasserbedarf über viele Jahre deckt, oder der durch Regen- und/oder Grundwasser immer wieder aufgefüllt wird.

Der Hydrolyseur der neuen USV-Anlage kann ohne Beeinträchtigung deren Funktion sehr klein ausgebildet sein. Eine Nennleistung von weniger als 19 % und sogar von weniger als 5 % der Nennleistung des Generators der USV-Anlage ist ausreichend, da dem Hydrolyseur für die Vororterzeugung des Wasserstoffs sehr lange Zeiträume zur Verfügung stehen, in denen das Stromversorgungsnetz als Hauptstromquelle dient. Dabei ist es nicht zwingend, daß auch der Hydrolyseur durch diese Hauptstromquelle versorgt wird. Es ist auch denkbar, für die Versorgung des Hydrolyseurs auf zusätzliche Solarzellen zurückzugreifen. Dies bedeutet aber in aller Regel auch einen zusätzlichen Aufwand. So ist es bevorzugt, den Hydrolyseur für die Vororterzeugung des Wasserstoffs über die Hauptstromquelle zu versorgen. Es versteht sich, daß der Hydrolyseur automatisch deaktiviert wird, sobald der ihm zugeordnete Wasserstoffspeicher gefüllt ist.

Der Hydrolyseur selbst kann von unterschiedlichem Aufbau sein. Vorzugsweise handelt es sich um einen modernen Hydrolyseur, der auf einer Polymer-Elektrolyt-Membran aufbaut, d. h. um einen sogenannten PEM-Hydrolyseur. Die Brennstoffzelle baut ebenfalls vorzugsweise auf einer Polymer-Elektrolyt-Membran auf.

Zur Überbrückurig kurzzeitiger Ausfälle der Hauptstromversorgung bis zum vollen Hochfahren der Brennstoffzelle kann eine Kondensatorbatterie als elektrischer Energiespeicher vorgesehen sein.

Zur Funktionskontrolle und zum Verhindern eines Festsetzens von beweglichen Teilen, wie beispielsweise Gasventilen, kann eine Steuerung vorgesehen sein, die in vorgegebenen Zeitabständen die neue USV-Anlage kurzzeitig aktiviert. Bei einem ständigen Stand-by-Betrieb der Brennstoffzelle kann dies sogar unnötig sein.

Die Erfindung wird im folgenden anhand von Ausführungsbeispielen näher erläutert und beschrieben. Dabei zeigt
- Fig. 1: die wesentliche Anordnung der wesentlichen Bauteile der neuen Vorrichtung zur unterbrechungsfreien Stromversorgung in einer ersten Ausführungsform,
- Fig. 2: die prinzipielle Anordnung der wesentlichen Bauteile der neuen Vorrichtung zur unterbrechungsfreien Stromversorgung in einer zweiten Ausführungsform und
- Fig. 3: einen Einlinien-Stromlaufplan zu der neuen Vorrichtung zur unterbrechungsfreien Stromversorgung.

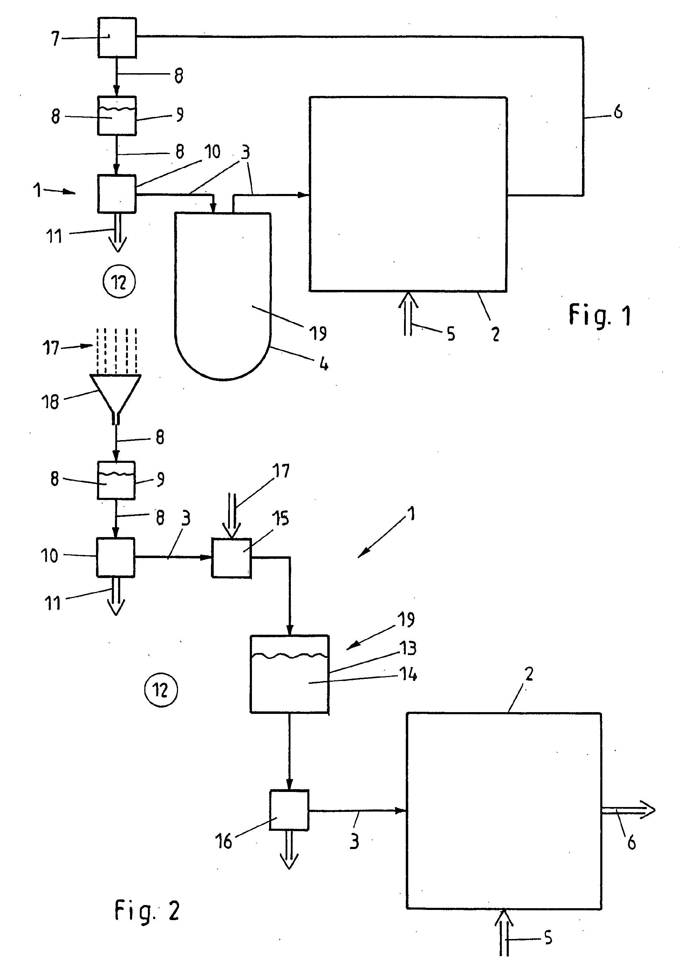

Die in Fig. 1 in ihren wesentlichen Teilen dargestellte Vorrichtung 1 zur unterbrechungsfreien Stromversorgung, die im folgenden auch als USV-Anlage 1 bezeichnet wird, weist eine Brennstoffzelle 2 auf, die zur Stromversorgung einer Last dient, wenn eine Hauptstromquelle, beispielsweise ein Stromversorgungsnetz, ausfällt. Die Last, die Hauptstromquelle und alle elektrischen Verbindungen sind in Fig. 1 nicht dargestellt. Die Brennstoffzelle erzeugt Strom durch die kalte Oxidation von Wasserstoff 3, der hier aus einem Hydridspeicher 4 kommt. Die Sauerstoffversorgung der Brennstoffzelle erfolgt hier durch Luftsauerstoff 5. Der in dem Abgas der Brennstoffzelle enthaltene Wasserdampf 6 wird in einem Kondensator 7 zu Wasser 8 kondensiert und einem Wassertank 9 zugeführt. Der Wassertank 9 dient als Vorratsbehälter für einen Hydrolyseur 10, der das Wasser 8 unter Einwirkung einer angelegten elektrischen Spannung in Wasserstoff 3 und Sauerstoff 11 aufspaltet. Während der Sauerstoff 11 in die Umgebung 12 abgelassen wird, wird der Wasserstoff 3 dem Hydridspeicher 4 zugeführt, womit sich der Kreislauf für den Wasserstoff 3 schließt. Dieser Kreislauf läuft aber nicht kontinuierlich, sondern es werden immer nur die aktuell sinnvollen Teilschritte ausgeführt. Beim Ausfall der Hauptstromquelle erzeugt ersatzweise die Brennstoffzelle 2 unter Verbrauch von Wasserstoff 3 Strom. Gleichzeitig wird kein neuer Wasserstoff 3 von dem Hydrolyseur 10 erzeugt, weil die hierfür benötigte elektrische Energie nicht zur Verfügung steht. Die Neuerzeugung von Wasserstoff 3 erfolgt dann, wenn die Hauptstromquelle die Stromversorgung wieder übernommen hat und elektrische Energie wieder ausreichend zur Verfügung steht. Da Ausfälle der Hauptstromquelle relativ gesehen selten sind, steht für das Wiederauffüllen des Hydridspeichers 4 mit dem Hydrolyseur 10 jeweils ein relativ langer Zeitraum zur Verfügung, so daß der Hydrolyseur 10 relativ klein ausgelegt werden kann und damit wenig von der Leistung der Hauptstromquelle beansprucht. Für die Ausnutzung der maximalen Wasserstoffspeicherkapazität des Hydridspeicher 4 ist es zudem vorteilhaft, wenn die Beladung mit Wasserstoff 3 langsam erfolgt. Wenn die Brennstoffzelle 2 auch bei Versorgung der Last über die Hauptstromquelle im Stand-by-Betrieb gehalten wird, um bei Ausfall der Hauptstromquelle möglichst schnell ihre volle Leistung zu erreichen, muß der Hydrolyseur 10 aber in jedem Fall eine deutlich höhere Nennleistung als die Leerlaufleistung der Brennstoffzelle 2 aufweisen. Die Brennstoffzelle 2 muß demgegenüber so groß ausgelegt sein, daß sie die Versorgung der Last bei Ausfall der Hauptstromquelle voll übernehmen kann. Hieraus resultiert ein Verhältnis der Nennleistung des Hydrolyseurs 10 zu derjenigen der Brennstoffzelle 2 von typischerweise 1:10 bis 1:100. Sowohl der Hydrolyseur 10 als auch die Brennstoffzelle 2 weist als zentralen Bestandteil eine Polymer-Elektrolyt-Membran- auf. Insbesondere bei der Brennstoffzelle 2 kann es sich überdies um eine Parallelschaltung einzelner Brennstoffzelleneinheiten beispielsweise in Form eines sogenannten Stacks handeln, die eine größer Ausgangsspannung erzeugt als eine einstufige Brennstoffzelle. So kann die Versorgungspannung einer kleineren Sende-/Empfangsstation für den Mobilfunk, eines sogenannten Repeaters, von 48 Volt direkt, d.h. ohne Umspannung, bereitgestellt werden.

In Fig. 1 und auch in der im folgenden beschriebenen Fig. 2 sind nicht nur alle elektrischen Verbindungen weggelassen, es fehlen auch etwaige Ventile in den dargestellten Leitungen und zugehörige Steuerungen. Diese weiß der Fachmann jedoch ohne weiteres zu ergänzen.

Die Ausführungsform der USV-Anlage 1 gemäß Fig. 2 unterscheidet sich von derjenigen gemäß Fig. 1 dadurch, daß der Speicher für den Wasserstoff 3 ein Flüssigkeitstank 13 für Methanol ist, dem ein Umwandler 15 vorgeschaltet und ein Reformer 16 nachgeschaltet ist. Der Umwandler 15 wandelt Wasserstoff 3 von dem Hydrolyseur 10 unter Verwendung von Kohlendioxid 17 aus der Umgebung 12 in das Methanol 14 um, während der Reformer den Wasserstoff 3 unter Freisetzung von Kohlendioxid 17 aus dem Methanol 14 zurückgewinnt. Der Vorteil dieser Anordnung ist die einfache und kompakte Speicherung relativ großer Wasserstoffmengen. Ein weiterer Unterschied der USV-Anlage 1 gemäß Fig. 2 zu derjenigen gemäß Fig. 1 besteht darin, daß kein Kondensator 7 für den Wasserdampf 6 von der Brennstoffzelle 2 vorgesehen ist, d.h., daß auf einen geschlossenen Kreislauf für den Wasserstoff 3 verzichtet ist. Vielmehr wird der Hydrolyseur 11 hier durch Regen 17 versorgt, der mit einem Kollektor 18 gesammelt wird.

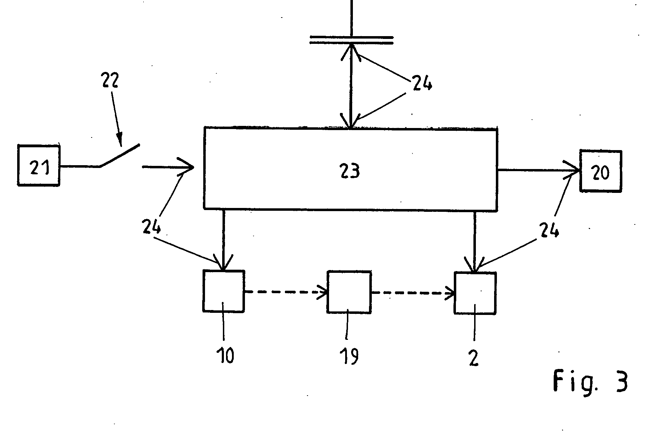

In dem zu den Figuren 1 und 2 passenden Einlinien-Stromlaufplan gemäß Fig. 3 ist auch der Speicher 19 für den Wasserstoff 3 mit eingezeichnet, wobei eine gestrichelte Linie als Hinweis auf die Übergabe von Wasserstoff 3 von dem Hydrolyseur 11 über den Speicher 4, 13 an die Brennstoffzelle 2 dient. Innerhalb des eigentlichen Einlinien-Stromlaufplans ist zu erkennen, daß eine Last 20 mit Strom entweder durch eine externe Hauptstromquelle 21 oder durch die Brennstoffzelle 2 versorgt wird. Dabei ist zwischen der Last 20 und der Hauptstromquelle 21 neben einem Schalter 22 eine Steuerschaltung 23 angeordnet. Die Steuerschaltung 23 stellt selektiv elektrische Verbindungen zwischen den einzelnen elektrischen Bauteilen der USV-Anlage her, wobei Pfeilspitzen 24 die dabei auftretenden Energieflußrichtungen andeuten. Reine Steuerverbindungen zu den bzw. zwischen den Bauteilen sind aber nicht dargestellt. Bei Funktion der Hauptstromquelle 21 ist der Schalter 22 entgegen der Darstellung geschlossen, so daß die Steuerschaltung 23 von der Hauptstromquelle 21 gespeist wird. Die Steuerschaltung 23 versorgt ihrerseits die Last 20. Weiterhin betreibt sie den Hydrolyseur 11 zur Erzeugung von Wasserstoff 3, bis der Speicher 19 gefüllt ist. Die Brennstoffzelle 2 wird im Stand-by-Betrieb gehalten, in dem sie einen gewissen Leerlaufverbrauch an Wasserstoff 3 hat, so daß der Hydrolyseur 11 den Speicher 19 auch dann von Zeit zu Zeit auffüllen muß, wenn die Hauptstromquelle 21 nicht ausfällt.

Beim Zusammenbruch der Hauptstromquelle 21 wird der Schalter 22 geöffnet. Jetzt obliegt die Speisung der Steuerschaltung 23 zur Versorgung der Last 20 mit Strom der Brennstoffzelle 2. Um den Zeitraum zu überbrücken, bis die Ausgangsleistung der Brennstoffzelle 2 voll hochgefahren ist, ist eine Kondensatorbatterie 25 als elektrischer Kurzzeitenergiespeicher vorgesehen. Wenn die Hauptstromquelle 21 wieder zur Verfügung steht, wird der Schalter 22 wieder geschlossen. Dann wird die Brennstoffzelle 2 heruntergefahren. Anschließend wird mit dem Hydrolyseur 11 der Speicher 19 mit Wasserstoff 3 aufgefüllt.

Die neue USV-Anlage ist nicht nur sehr pflegeleicht und für sehr lange Wartungsintervalle ausgelegt. Sie kann darüberhinaus ohne die Notwendigkeit einer ins Freie führenden Abgasleitung in geschlossenen Räumen betrieben werden, da selbst bei offenem Wasserstoffkreislauf keine gefährlichen Abgase entstehen.

### BEZUGSZEICHENLISTE

- 1 -: USV-Anlage
- 2 -: Brennstoffzelle
- 3 -: Wasserstoff
- 4 -: Hydridspeicher
- 5 -: Luftsauerstoff
- 6 -: Wasserdampf
- 7 -: Kondensator
- 8 -: Wasser
- 9 -: Wassertank
- 10 -: Hydrolyseur

- 11 -: Sauerstoff
- 12 -: Umgebung
- 13 -: Flüssigkeitstank
- 14 -: Methanol
- 15 -: Umwandler
- 16 -: Reformer
- 17 -: Regen
- 18 -: Kollektor
- 19 -: Speicher
- 20 -: Last

- 21 -: Hauptstromquelle
- 22 -: Schalter
- 23 -: Steuerschaltung
- 24 -: Pfeilspitze
- 25 -: Kondensatorbatterie

## Patentansprüche

1. Vorrichtung zur unterbrechungsfreien Stromversorgung, mit einer Brennstoffzelle zur Stromerzeugung durch kalte Oxidation von Wasserstoff zu Wasser bei Ausfall einer Hauptstromquelle, insbesondere bei Ausfall eines Stromversorgungsnetzes, und mit einem Speicher für den Wasserstoff, **dadurch gekennzeichnet, daß** ein Hydrolyseur (10) für die Vororterzeugung des Wasserstoffs (3) aus Wasser (8) vorgesehen ist.

2. Vorrichtung nach Anspruch 1, **dadurch gekennzeichnet, daß** die Brennstoffzelle (2) unter Anlegen einer elektrischen Spannung von der Hauptstromquelle (21) als der Hydrolyseur (10) betreibbar ist.

3. Vorrichtung nach Anspruch 1, **dadurch gekennzeichnet, daß** der Hydrolyseur (10) als separates Bauteil neben der Brennstoffzelle (2) vorgesehen ist.

4. Vorrichtung nach einem der Ansprüche 1 bis 3, **dadurch gekennzeichnet, daß** für den Wasserstoff (3) ein Hydridspeicher (4) vorgesehen ist.

5. Vorrichtung nach einem der Ansprüche 1 bis 3, **dadurch gekennzeichnet, daß** für den Wasserstoff (3) ein Flüssigkeitstank (13) als Speicher (19) vorgesehen ist, wobei ein Umwandler (15) aus dem vorort erzeugten Wasserstoff (3) eine Speicherflüssigkeit gewinnt, die in dem Flüssigkeitstank (14) lagerbar ist, und wobei ein Reformer (16) zur Versorgung der Brennstoffzelle (2) Wasserstoff (3) aus der Speicherflüssigkeit zurückgewinnnt.

6. Vorrichtung nach einem der Ansprüche 1 bis 5, **dadurch gekennzeichnet, daß** ein Kondensator (7) für die Abgase der Brennstoffzelle (2) und eine Rückführung für das in dem Kondensator anfallende Wasser (8) zu dem Hydrolyseur (10) vorgesehen sind.

7. Vorrichtung nach einem der Ansprüche 1 bis 6, **dadurch gekennzeichnet, daß** dem Hydrolyseur (10) eine Regen- (17) und/oder Grundwasserversorgung zugeordnet ist.

8. Vorrichtung nach einem der Ansprüche 1 bis 7, **dadurch gekennzeichnet, daß** der Hydrolyseur (10) eine Nennleistung aufweist, die weniger als 10 Prozent der Nennleistung des Brennstoffzelle (2) beträgt.

9. Vorrichtung nach einem der Ansprüche 1 bis 8, **dadurch gekennzeichnet, daß** der Hydrolyseur (10) eine Polymer-Elektrolyt-Membran aufweist.

10. Vorrichtung nach einem der Ansprüche 1 bis 9, **dadurch gekennzeichnet, daß** eine Kondensatorbatterie (25) als elektrischer Energiespeicher vorgesehen ist.
